(19) Europäisches Patentamt
European Patent Office
Office européen des brevets

(11) **EP 3 975 011 B1**

(12) **EUROPEAN PATENT SPECIFICATION**

(45) Date of publication and mention
of the grant of the patent:
**05.11.2025 Bulletin 2025/45**

(21) Application number: **20199040.5**

(22) Date of filing: **29.09.2020**

(51) International Patent Classification (IPC):
**G06F 17/15** (2006.01)   **G06F 17/18** (2006.01)
**G06N 3/04** (2023.01)   **G06N 3/08** (2023.01)

(52) Cooperative Patent Classification (CPC):
**G06N 3/084; G06F 17/153; G06F 17/18;
G06N 3/045; G06N 3/0464; G06N 3/047;
G06N 3/0475; G06N 3/088; G06N 3/09**

(54) **DEVICE AND METHOD FOR TRAINING A NORMALIZING FLOW USING SELF-NORMALIZED GRADIENTS**

VORRICHTUNG UND VERFAHREN ZUM TRAINIEREN EINES NORMALISIERUNGSSTROMS UNTER VERWENDUNG VON SELBSTNORMALISIERTEN GRADIENTEN

DISPOSITIF ET PROCÉDÉ POUR L'APPRENTISSAGE D'UN FLUX DE NORMALISATION UTILISANT DES GRADIENTS AUTO-NORMALISÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.03.2022 Bulletin 2022/13**

(73) Proprietor: **Robert Bosch GmbH
70442 Stuttgart (DE)**

(72) Inventors:
• **Welling, Max**
**1098XH Amsterdam (NL)**
• **Forré, Patrick**
**1090 GH Amsterdam (NL)**
• **Peters, Jorn**
**1082ME Amsterdam (NL)**
• **Hoogeboom, Emiel**
**1098 XA Amsterdam (NL)**
• **Keller, Thomas Andy**
**1016XV Amsterdam (NL)**
• **Khoreva, Anna**
**70197 Stuttgart (DE)**
• **Jaini, Priyank**
**1098XH Amsterdam (DE)**

(56) References cited:
• **WILL GRATHWOHL ET AL: "FFJORD: Free-form Continuous Dynamics for Scalable Reversible Generative Models", ARXIV.ORG, CORNELL UNIVERSITY LIBRARY, 201 OLIN LIBRARY CORNELL UNIVERSITY ITHACA, NY 14853, 2 October 2018 (2018-10-02), XP081055157**
• **LUIGI GRESELE ET AL: "Relative gradient optimization of the Jacobian term in unsupervised deep learning", ARXIV.ORG, CORNELL UNIVERSITY LIBRARY, 201 OLIN LIBRARY CORNELL UNIVERSITY ITHACA, NY 14853, 26 June 2020 (2020-06-26), XP081707651**
• **JENS BEHRMANN ET AL: "Invertible Residual Networks", ARXIV.ORG, CORNELL UNIVERSITY LIBRARY, 201 OLIN LIBRARY CORNELL UNIVERSITY ITHACA, NY 14853, 2 November 2018 (2018-11-02), XP081045399**
• **DIEDERIK P KINGMA ET AL: "Glow: Generative Flow with Invertible 1x1 Convolutions", ARXIV.ORG, CORNELL UNIVERSITY LIBRARY, 201 OLIN LIBRARY CORNELL UNIVERSITY ITHACA, NY 14853, 9 July 2018 (2018-07-09), XP081245422**
• **EMIEL HOOGEBOOM ET AL: "Emerging Convolutions for Generative Normalizing Flows", ARXIV.ORG, CORNELL UNIVERSITY LIBRARY, 201 OLIN LIBRARY CORNELL UNIVERSITY ITHACA, NY 14853, 31 January 2019 (2019-01-31), XP081023953**

- **GEORGE PAPAMAKARIOS ET AL: "Normalizing Flows for Probabilistic Modeling and Inference", ARXIV.ORG, CORNELL UNIVERSITY LIBRARY, 201 OLIN LIBRARY CORNELL UNIVERSITY ITHACA, NY 14853, 5 December 2019 (2019-12-05), XP081546128**

## Description

The invention concerns a method for training a normalizing flow, a method for using the normalizing flow, a classifier, a training system, a computer program and a machine-readable storage medium.

Prior art

Will Grathwohl ET AL: "FFJORD: Free-form Continuous Dynamics for Scalable Reversible Generative Models",ARXIV.ORG, CORNELL UNIVERSITY LIBRARY, 201 OLIN LIBRARY CORNELL UNIVERSITY ITHACA, NY 14853, October 2nd 2018 and Diederik P. Kingma, Prafulla Dhariwal, "Glow: Generative Flow with Invertible 1x1

Convolutions", https://arxiv.org/abs/1807.03039v2, July 10th 2018 both disclose a method for determining a log-likelihood of a datum by means of a normalizing flow.

Advantages of the invention

Many modern devices are equipped with technical measures for sensing an internal state of the respective device and/or a state of an environment of the device. This typically causes an abundance of data being generated from the device.

Finding a way to automatically sift through this data gives rise to multiple technical problems. One of these problems is finding a method for determining if or to what degree a given datum characterizing an internal state or a state of an environment is important.

One way of determining an importance of a datum is to determine a data log-likelihood of the datum with respect to, e.g., some previously recorded data. In other words, the importance of the datum can be measured by determining how likely it is to observe the datum given the previously recorded data. For example, one could record a dataset of internal states of a machine (e.g., drawn current, heat, pressure) during normal operation of the machine. If during further operation of the machine an internal state is sensed that has a low log-likelihood with respect to the dataset, this may indicate a malfunction of the machine or an otherwise non-normal behavior of the machine.

It can also be crucial for classifiers to determine a log-likelihood. For example, a Bayesian classifier determines a probability $p(y|x)$ of a class y for a datum $x$ according to the formula

$$p(y|x) = \frac{p(y)p(x|y)}{p(x)},$$

wherein $p(y)$ is a prior probability of the class, $p(x)$ is a data log-likelihood of $x$ and $p(x|y)$ is a class-conditional log-likelihood, i.e., the likelihood of observing the datum for the class. As can be seen from the formulation, a Bayesian classifier needs to determine two likelihood values, i.e., the class-conditional likelihood and the data log-likelihood. A classification accuracy of the Bayesian classifier crucially depends on the ability to correctly determine both likelihood values.

Determining an accurate likelihood or log-likelihood of a datum is hence an important technical problem arising in different technical fields and for different technical tasks.

Especially when having to determine a likelihood for high-dimensional data, e.g., images or audio signals, normalizing flows have shown themselves to be best-suited for determining the likelihood. A normalizing flow can be understood as a neural network from the field of machine learning. The normalizing flow is able to map a first distribution of a datum to a second distribution, wherein the second distribution can be chosen by a user. The advantage of a normalizing flow lies in the fact that the second distribution can be chosen almost arbitrarily. It can especially be chosen such that determining a likelihood of the second distribution can be achieved efficiently and in closed form. From this likelihood, the likelihood of the datum with respect to the first distribution can easily be determined. Hence, the likelihood of the datum can be easily and efficiently computed even if the first distribution is difficult and/or cannot be evaluated in closed form. Instead of the likelihood, the normalizing flow may also determine a log-likelihood.

A normalizing flow is invertible, i.e., a normalizing flow is capable of mapping a given datum to a latent representation and is also capable to map from the latent representation back to the datum.

Being invertible comes with the drawback that training a normalizing flow requires an inversion of a matrix of weights for each layer of the normalizing comprising weights, wherein each matrix is typically comparably large. As the computational complexity of a matrix inversion is generally cubical, the common approach in normalizing flows is to construct the respective weight matrices such that they are triangular as this reduces the computational complexity of the inversion of the matrices to be quadratic. However, designing a normalizing flow this way, i.e., constraining the weight matrices to be triangular, severely restricts the normalizing flow in learning a suitable mapping from the first distribution to the second distributions as it severely restricts the degrees of freedom of the mapping.

It is hence desirable to obtain a normalizing flow that is not restricted to having to comprise triangular weight matrices, wherein the computational complexity of training the normalizing flow is quadratic. In the following, a normalizing flow not restricted to triangular weight matrices will be referred to as unrestricted normalizing flow.

The method with features of the independent claim 1 allows for training an unrestricted normalizing flow, wherein the computational complexity of training the normalizing flow is quadratic. The method advantageously achieves this by efficiently approximating the matrix inversions necessary during training of the normalizing flow.

With respect to common normalizing flows, training the normalizing flow this way leads to not having to restrict the normalizing flow with respect to the weight layers, which leads to a more powerful mapping function and hence improves the ability of the normalizing flow to accurately determine a likelihood or log-likelihood. The ability of the normalizing flow to accurately determine the likelihood or log-likelihood may also be referred to as performance of the normalizing flow in the following.

Compared to simply training an unrestricted normalizing flow with standard gradient decent methods, training an unrestricted normalizing flow with the method with features of the independent claim 1 leads to a reduction in computational complexity from cubical to quadratic. Given a same amount of training time, this reduction in computational complexity leads to the unrestricted normalizing flow being able to be trained with more training data and hence the unrestricted normalizing flow being able to extract more information during training. In turn, this advantageously leads to an increase in performance of the unrestricted normalizing flow.

Disclosure of the invention

In a first aspect, the invention is concerned with a computer-implemented method according to claim 1.

A normalizing flow can be understood as a neural network from the field of machine learning. The normalizing flow is able to map a first distribution of a datum to a second distribution, which can be chosen by a user. Preferably, a multivariate normal distribution with an identity matrix as covariance matrix is chosen as second distribution.

A normalizing flow may comprise a plurality layers, wherein a flow of information defines an order of the layers. If the first layer provides an output, i.e., the layer output, to a second layer, the first layer can be considered to precede the second layer while the second layer follows the first layer.

The input signal may be understood as a datum that is provided to the normalizing flow. The input signal may be used as an input of a layer of the normalizing flow, i.e., a layer input. A layer receiving the input signal as layer input may also be referred to as an input layer of the normalizing flow. Similarly, a layer output of a layer may be used as the output signal of the normalizing flow. Such a layer may be referred to as an output layer of the normalizing flow. If a layer comprised in the normalizing flow is neither an input layer nor an output layer, it can be understood as a hidden layer.

The output signal determined from the normalizing flow for the input signal may also be understood as characterizing a classification of importance of the input signal. If the likelihood or log-likelihood characterized by the output signal is high, the input signal may be understood as "not important" with respect to the data the normalizing flow has been trained with, i.e., the input signal is rather similar to at least one training input signal used for training the normalizing flow. Likewise, the input signal may be understood as "important" if the likelihood or log-likelihood characterized by the output signal is low, i.e., the input signal is rather different from the training input signals used for training the normalizing flow. Determining, whether a likelihood or log-likelihood is either low or high, can be achieved by comparing the likelihood or log-likelihood to a predefined threshold. For example, if the likelihood or log-likelihood is below the predefined threshold, the input signal may be classified as "important". If the likelihood or log-likelihood is equal to the predefined threshold or above the predefined threshold, the input signal may be classified as "not important".

The first layer may be understood as a weight layer. A weight layer may be understood as comprising a plurality of weights, wherein a layer output of the weight layer is determined based on the plurality of weights and the weights can be adapted during training of the normalizing flow. Typical forms of weight layers are fully connected layers or convolutional layers.

According to the invention, an input signal may comprise at least one image as recorded by a sensor, e.g., a camera sensor, a LIDAR sensor, a radar sensor, an ultrasonic sensor or a thermal camera. Alternatively or additionally, the input signal may comprise at least one audio signal as recorded from a microphone. The audio signal may, for example, characterize a recording of speech. Alternatively, the audio signal may characterize a recording of audio events, e.g., sirens, alarms or other auditory notification signals.

The training input signal may be determined by selecting an input signal from a computer-implemented database of input signals. Alternatively, the input signal may also be determined from a sensor of a device that comprises the sensor.

The training output signal may then be determined by forwarding the training input signal through the normalizing flow, i.e., through the layers of the normalizing flow.

The training output signal may be in the form of a vector. If it is in the form of a tensor, it may be reshaped to a vector.

Preferably, the first loss value is determined by determining a negative log-likelihood of the output signal with respect to the second probability distribution. Updating the trainable parameters of the first layer may then be achieved by means of a gradient descent algorithm.

The normalizing flow may also be configured to accept a plurality of input signals, i.e., a batch of input signals, wherein for each input signal from the plutality of input signals a corresponding output signal characterizing a likelihood or a log-likelihood of the respective input signal is determined by the normalizing flow.

Likewise, the normalizing flow may preferably be trained with a plurality of training input signals. Preferably, a training output signal is determined for each training input signal from the plurality of training input signals and for each training output signal a likelihood or log-likelihood of the respective output signal with respect to the predefined distribution is determined. Based on this determined plurality likelihoods or log-likelihoods, the first loss value may then preferably be determined by averaging or summing the likelihoods or log-likelihoods.

If a single training input signal is used for training, the first loss value may be the likelihood or log-likelihood determined for an output signal of the normalizing flow for the single training input signal.

It may also be envisioned that the approximation of the inverse is optimized based on the at least one training input signal.

The advantage of this is that the inverse can be determined based on a limited amount of training input signals during training. This substantially speeds up the training. Given equal resources, i.e., the same amount of time, the approach hence increases the performance of the normalizing flow as the normalizing flow can be trained with more training input signals.

It can also be imagined that the first layer is a fully connected layer and the layer output is determined according to the formula

$$z_l = \sigma(h_l) = \sigma(W_l z_{l-1}),$$

wherein $z_l$ is the layer output of the first layer, $\sigma$ is an invertible activation function of the first layer and $h_l$ is the result of a matrix multiplication of a matrix $W_l$ comprising the trainable parameters of the first layer and the layer input $z_{l-1}$.

The advantage of this approach is that a fully connected layer can be used in the normalizing flow which allows for enabling more degrees of freedom of the mapping represented by the normalizing flow. As described above, this leads to an increase in performance of the normalizing flow.

It can be further imagined that, the approximation of the gradient of the matrix $W_l$ can be determined according to the formula

$$\nabla_{W_l} = \frac{\partial p_X(x_i)}{\partial h_l} z_{l-1}^T + R_l^T,$$

wherein $\frac{\partial p_X(x_i)}{\partial h_l}$ is a partial derivative of the first loss value with respect to the result of the matrix multiplication, the superscript T denotes transposing a matrix or a vector, $x_i$ is the training input signal and $R_l$ is the approximation of the inverse of the matrix $W_l$.

$p_X(x_i)$ may be understood as a likelihood or log-likelihood of the training input signal $x_i$, e.g., the standard formulation of the likelihood or log-likelihood used in training normalizing flows.

Determining the approximation of the gradient this way is advantageous as approximating the inverse of the weight matrix leads to a decrease in computational complexity of the training method. This leads to an increase in performance of the normalizing flow as described above.

It can also be imagined that $R_l$ is determined based on a second loss function

$$\mathcal{L}_{\text{recon}}^{(l)} = \| R_l W_l z_{l-1} - z_{l-1} \|,$$

wherein $\|\cdot\|$ is a norm. In particular, the norm may be a squared Euclidean distance. However, other norms are possible as well, e.g., a Euclidean norm, a Manhattan norm or another p-norm.

If a single training input signal is used for training the normalizing flow, $R_l$ may be determined by minimizing the second loss function. If a batch of training input signals is used for training, $R_l$ may preferably be determined by determining $z_{l-1}$ for each training input signal in the batch, determining an output of the second loss function for each determined $z_{l-1}$ and minimizing an average or a sum of the outputs with respect to $R_l$.

Determining the gradient this way is advantageous as it does not require an inversion of the matrix $W_l$.

Additionally, the inventors surprisingly found that a sufficient approximation of the inverse of the matrix $W_l$ can be found by optimizing $R_l$ based on the second loss function using an iterative optimization algorithm, wherein only one optimization step is performed for determining $R_l$. For example, $R_l$ may be determined by means of a gradient descent algorithm using only a single step of gradient descent.

The advantage of adapting the trainable parameters of the first layer this way is that the time required for determining the approximation of the gradient is greatly reduced, which in turn leads to a speed up in training, all the while enabling $W_l$ not having to be triangular. The speed up in training time leads to an increase in performance of the normalizing flow as described above.

It can also be imagined that the first layer is a convolutional layer and the layer output is determined according to the formula

$$Z_l = \sigma(H_l) = \sigma(W_l \star Z_{l-1}),$$

wherein $Z_l$ is the layer output of the first layer, $\sigma$ is an invertible activation function of the first layer, $H_l$ is the result of a discrete convolution of a tensor $W_l$ and the layer input $Z_{l-1}$, wherein the tensor $W_l$ comprises the trainable parameters of the first layer and $\star$ denotes a discrete convolution operation.

This is advantageous as convolutional layers increase the performance of the normalizing flow for input signals comprising images.

It can be further imagined that the gradient of the first loss value with respect to the trainable parameters of the first layer can then be determined according to the formula

$$\nabla_{W_l} = \frac{\partial p_X(x_i)}{\partial H_l} \star Z_{l-1} + flip(R_l) \odot M,$$

$$M = ones\_like(Z_l) \star ones\_like(Z_{l-1}),$$

wherein $\frac{\partial p_X(x_i)}{\partial H_l}$ is a partial derivative of the first loss value with respect to the result of the discrete convolution, $x_i$ is the training input signal, $\odot$ denotes an element-wise multiplication operation, *ones_like* is a function that takes a first tensor as input and returns a second tensor of the same shape as the first tensor, wherein the second tensor is filled with all ones, and $R_l$ is a tensor characterizing an approximation of a third tensor, wherein convolving the third tensor with $H_l$ yields $Z_{l-1}$, and *flip* is a function that determines a tensor for a transpose convolution.

This is advantageous as the approximation leads to a decrease in computational complexity of the training method. This leads to an increase in performance of the normalizing flow as described above.

The layer input $Z_{l-1}$ is preferably given in the form of a three-dimensional tensor, wherein a first dimension corresponds to an amount of channels of the layer input and a second and third dimension corresponds to a height and width of the layer input respectively. If the first layer is an input layer of the normalizing flow, the layer input can, for example, be an RGB image, wherein the number of channels would hence be three.

The tensor $W_l$ can be understood as a tensor of kernels as is commonly used for convolutional neural networks. Preferably, the tensor of kernels is a four-dimensional tensor, wherein a first dimension corresponds to the number of filters used in the convolutional layer, i.e., the first layer, a second dimension corresponds to the number of input channels of the layer input $Z_{l-1}$ and a third and fourth dimension of the tensor of kernels correspond to the height and width of the kernels respectively.

The result $H_l$ of convolving the layer input with the tensor of kernels may preferably be a three-dimensional tensor of feature maps, wherein a first dimension corresponds to the number of feature maps (there exist as many as there are kernels) and a second and third dimension correspond to the height and width of the result respectively.

The third tensor may be understood as allowing for inverting a convolution based on the tensor of kernels $W_l$ i.e., $U_l \star H_l = Z_{l-1}$, wherein $U_l$ is the third tensor.

The tensor $R_l$ is an approximation of the third tensor, wherein $R_l$ may preferably be obtained based on a second loss function

$$\mathcal{L}_{\text{recon}}^{(l)} = \| R_l \star W_l \star Z_{l-1} - Z_{l-1} \|,$$

wherein $\|\cdot\|$ is a norm.

In particular, the norm may be a squared Euclidean distance. However, other norms are possible as well, e.g., a Euclidean norm, a Manhattan norm or another *p*-norm.

If a single training input signal is used for training the normalizing flow, $R_l$ may be determined by minimizing the second loss function with respect to $R_l$. If a batch of training input signals is used for training, $R_l$ may preferably be determined by determining $Z_{l-1}$ for each training input signal in the batch, determining an output of the second loss function for each determined $Z_{l-1}$ and minimizing an average or a sum of the outputs with respect to $R_l$.

Determining the gradient this way is advantageous as it does not require an inversion of a matrix based on the tensor $W_l$. For determining the gradient of the loss value with respect to the trainable parameters of the first layer, a convolution can also be expressed in the form of a matrix multiplication

$$Z_l = unflatten\big(\mathcal{T}(W_l) \cdot flatten(Z_{l-1})\big),$$

wherein *flatten* is a function that flattens a tensor, $\cdot$ is a matrix multiplication, $\mathcal{T}$ is a function that transforms the kernels of the tensor of kernels $W_l$ into a Toeplitz matrix and *unflatten* is an inverse function of the *flatten* function.

Using this notation, one obtains a gradient $\nabla_{W_l}$ that comprises a term $\mathcal{T}(W_l)^{-1}$, i.e., an inversion of a matrix based on the tensor of kernels $W_l$. Determining and using the tensor $R_l$ as shown above hence removes the need for a matrix inversion. This in turn reduces the training time, leading to the advantages as already discussed above.

The result of $flip(R_l)$ corresponds to the tensor of kernels which achieves the transpose convolution $(R_l)^T$, and is given explicitly by swapping the input and output channels of the tensor $R_l$ and mirroring the filter height and filter width (spatial) dimensions of the kernels.

Additionally, the inventors surprisingly found that a sufficient tensor $R_l$ can be found by optimizing $R_l$ based on the second loss function using an iterative optimization algorithm, wherein only one optimization step is performed for determining $R_l$. For example, $R_l$ may be determined by means of a gradient descent algorithm using only a single step of gradient descent.

Irrespective of the type of the first layer, the activation function may be defined as a function of a scalar input, wherein for applying the activation function to a tensor the function is applied to each element of the tensor individually. The activation function $\sigma$ may preferably be a Leaky-ReLU.

It can be further envisioned that a device is operated based on the output signal of the normalizing flow.

This is advantageous as the improved performance of the normalizing flow leads directly to a better operation of the device.

For example, it can be imagined that the normalizing flow is comprised in a classifier, wherein the classifier is configured to determine a second output signal characterizing a classification of the input signal, wherein the second output signal is determined based on the first output signal.

The classifier may, for example, be an anomaly detector which is configured to classify, whether an input signal characterizes anomalous data or not with respect to, e.g., known normal data. It can be envisioned that the anomaly detector is configured to compare an output signal obtained for a given input signal to a predefined threshold. This can be understood as determining whether the likelihood or log-likelihood obtained from the normalizing flow indicates the input signal is unlikely with respect to the training data of the normalizing flow.

Alternatively, the classifier may also be a multiclass classifier, preferably a Bayesian classifier that determines a probability $p(y|x)$ of a class y for an input signal x according to the formula

$$p(y|x) = \frac{p(y)p(x|y)}{p(x)},$$

**wherein** $p(y)$ is a prior probability of the class, $p(x)$ is a data log-likelihood of $x$ and $p(x|y)$ is a class-conditional log-likelihood, i.e., the likelihood of observing the datum for the class. Besides the data log-likelihood, the class-conditional log-likelihood can also be obtained from a normalizing flow. For example, for each class to be classified, a normalizing flow can be trained with data only from this class. During inference, each normalizing flow can then predict a log-likelihood that represents the class-conditional log-likelihood for the class the respective normalizing flow belongs to.

The second output signal of the classifier may characterize a classification of the input signal into at least one class. Alternatively or additionally, the second output signal may also characterize a classification of objects in the input signal and a corresponding location of the objects. For example, the input signal may comprise an image and the second output signal may characterize a classification of an object in the image and the objects location in the image. Alternatively or additionally, the second output signal may also characterize multiple classifications of the input signal, e.g., a semantic segmentation.

Irrespective of the exact form of the classifier comprising the normalizing flow, the improved performance of the normalizing flow advantageously leads to an increase in classification accuracy of the classifier.

When used as part of a classifier, training the normalizing flow may be understood as at least part of training the classifier, i.e., the steps comprised in training the classifier may also be comprised in training the classifier.

Alternatively or additionally, it can be imagined that the input signal characterizes an internal state of a device and/or an operation status of the device and/or a state of an environment of the device, wherein the first output signal of the normalizing flow is made available to a user of the device by means of a displaying device.

The advantage of the proposed approach is that the user may be provided insights into the inner workings of the device in a guided human-machine interaction process.

For example, the device may be an at least partially automated machine, e.g., a robot, an at least partially automated manufacturing machine or an at least partially autonomous vehicle, wherein the at least partially automated machine is at least partially operated automatically based on an input signal from a sensor. The input signal may also be provided to the normalizing flow. The output signal may further be displayed on a monitor in a suitable fashion, e.g., to an operator of the machine. If the normalizing flow determines a low log-likelihood for an input signal, this indicates that the input signal from the sensor comprises data which may be understood as unusual, unlikely or even anomalous. It is conceivable that basing an automatic operation of the machine on such an input signal may lead to an undesired or even unsafe behavior of the machine as the unusual input signal can be expected to not be processed correctly by the machine. Based on the displayed log-likelihood, the operator could hence take over manual control of the machine to avoid a potentially unwanted and/or unsafe behavior of the machine. The normalizing flow would hence enable the user to get a direct insight into the inner workings of the machine, i.e., the importance of the input signals on which the automatic decisions of the machine are based.

Embodiments of the invention will be discussed with reference to the following figures in more detail. The figures show:

Figure 1    a training system for training a normalizing flow

Figure 2    a control system comprising a normalizing controlling an actuator in its environment;

Figure 3    the control system controlling an at least partially autonomous robot;

Figure 4    the control system controlling a manufacturing machine;

Figure 5    the control system controlling an automated personal assistant;

Figure 6    the control system controlling an access control system;

Figure 7    the control system controlling a surveillance system;

Figure 8     the control system controlling an imaging system;

Description of the embodiments

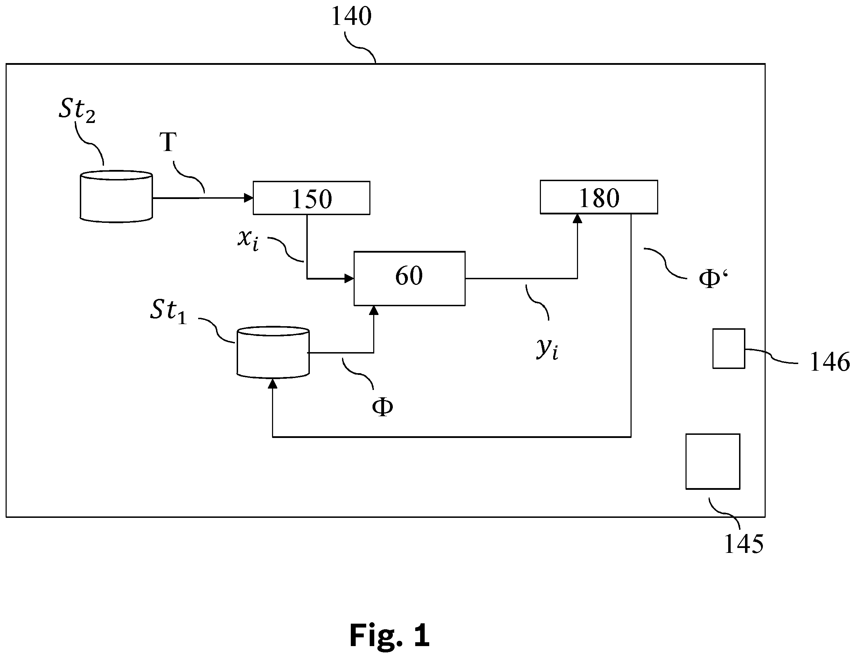

Figure 1 shows an embodiment of a training system (140) for training a unrestricted normalizing flow (60) by means of a training data set (T). The training data set (T) comprises a plurality of training input signals ($x_i$) which are used for training the classifier (60). The unrestricted normalizing flow may contain a plurality of fully connected layers and/or a plurality of convolutional layers. The normalizing flow is further parametrized by a plurality of parameters comprising the weights of the fully connected layers and/or the weights of the convolutional layers.

For training, a training data unit (150) accesses a computer-implemented database ($St_2$), where the database ($St_2$) provides the training data set (T). The training data unit (150) determines from the training data set (T) preferably randomly at least one training input signal ($x_i$) and transmits the training input signal ($x_i$) to the classifier normalizing flow (60). The normalizing flow (60) determines an output signal ($y_i$) based on the input signal ($x_i$). The determined output signal ($y_i$) is preferably given in the form of a vector. In further embodiments, the output signal ($y_i$) may also be given in form of a tensor. In these further embodiments, the determined output signal may be flattened to obtain the determined output signal in the form of a vector.

The determined output signal ($y_i$) is transmitted to a modification unit (180).

Based on the determined output signal ($y_i$), the modification unit (180) then determines new parameters (Φ') for the classifier (60). For this purpose, the modification unit (180) determined a negative log-likelihood value of the determined output signal ($y_i$) with respect to a second probability distribution. In the embodiment, a multivariate standard normal distribution is chosen. In further embodiments, other probability distributions may be chosen as second probability distribution.

The modification unit (180) determines the new parameters (Φ') based on the log-likelihood value. In the given embodiment, this is done using a gradient descent method, preferably stochastic gradient descent, Adam, or AdamW. The gradient descent method requires a gradient of the parameters (Φ) with respect to the negative log-likelihood value in order to determine the new parameters (Φ'). For determining the gradient, the negative log-likelihood value is backpropagated through the normalizing flow in order to determine the gradients of the parameters of the layers of the normalizing flow with respect to the negative log-likelihood value.

If a gradient is propagated through a fully connected layer, a gradient of the weights comprised in the fully connected layer is determined according to the formula

$$\nabla_{W_l} = \frac{\partial p_X(x_i)}{\partial h_l} z_{l-1}^T + R_l^T,$$

wherein $\frac{\partial p_X(x_i)}{\partial h_l}$ is a partial derivative of the first loss value with respect to the result of a matrix multiplication according to the formula

$$z_l = \sigma(h_l) = \sigma(W_l z_{l-1}),$$

wherein $z_l$ is the layer output of the fully connected layer, $\sigma$ is an invertible activation function of the fully connected layer and $h_l$ is the result of a matrix multiplication of a matrix $W_l$ comprising the weights of the fully connected layer and the layer input $z_{l-1}$ of the fully connected layer. Furthermore, the superscript T denotes transposing a matrix or a vector, $x_i$ is the training input signal and $R_l$ is a matrix that is determined by minimizing a second loss function

$$\mathcal{L}_{\text{recon}}^{(l)} = \|R_l W_l z_{l-1} - z_{l-1}\|_2^2,$$

with respect to $R_l$. Preferably, minimizing the second loss function is achieved by a single step of gradient descent on the second loss function. In other words, a single step of gradient descent on the first loss function may preferably include a single step of gradient descent for each fully connected layer on the second loss function.

If a gradient is propagated through a convolutional layer of the normalizing flow, a gradient of the weights comprised in the convolutional layer is determined according to the formula

$$\nabla_{W_l} = \frac{\partial p_X(x_i)}{\partial H_l} \star Z_{l-1}^T + flip(R_l) \odot M,$$

$$M = ones\_like(Z_l) \star ones\_like(Z_{l-1}),$$

wherein $\frac{\partial p_X(x_i)}{\partial H_l}$ is a gradient of the negative log-likelihood value with respect to the result of a discrete convolution

$$Z_l = \sigma(H_l) = \sigma(W_l \star Z_{l-1}),$$

wherein $Z_l$ is the layer output of the convolutional layer, $\sigma$ is an invertible activation function of the convolutional layer, $H_l$ is the result of a discrete convolution of a tensor $W_l$ comprising the weights of the convolutional layer and the layer input $Z_{l-1}$ and $\star$ denotes a discrete convolution operation. Moreover, $x_i$ is the training input signal, $\odot$ denotes an element-wise multiplication operation, *ones_like* is a function that takes a first tensor as input and returns a second tensor of the same shape as the first tensor, wherein the second tensor is filled with all ones, *flip* is a function that determines a tensor for a transpose convolution and $R_l$ is a tensor which may be determined by minimizing a second loss function

$$\mathcal{L}_{\text{recon}}^{(l)} = \| \boldsymbol{R}_l \star \boldsymbol{W}_l \star \boldsymbol{Z}_{l-1} - \boldsymbol{Z}_{l-1} \|_2^2$$

with respect to $R_l$. Preferably, minimizing the second loss function is achieved by a single step of gradient descent on the second loss function. In other words, a single step of gradient descent on the first loss function may preferably include a single step of gradient descent for each fully connected layer on the second loss function.

In further preferred embodiments, the normalizing flow is trained with a plurality of training input signals ($x_i$) during each step of gradient descent on the first loss function.

Preferably, the gradient descent may be repeated iteratively for a predefined number of iteration steps or repeated iteratively until the negative log-likelihood value is less than a predefined threshold value. Alternatively or additionally, it is also conceivable that the training is terminated when an average negative log-likelihood value with respect to a test or validation data set falls below a predefined threshold value. In at least one of the iterations the new parameters ($\Phi'$) determined in a previous iteration are used as parameters ($\Phi$) of the normalizing flow (60).

Furthermore, the training system (140) may comprise at least one processor (145) and at least one machine-readable storage medium (146) containing instructions which, when executed by the processor (145), cause the training system (140) to execute a training method according to one of the aspects of the invention.

The training input signal ($x_i$) is provided from a sensor. For example, the training system may be part of a device which is capable to sense its environment by means of a sensor. The input signals obtained from the sensor may be used directly for training the normalizing flow (60). Alternatively, the input signals may be transformed before being provided to the normalizing flow.

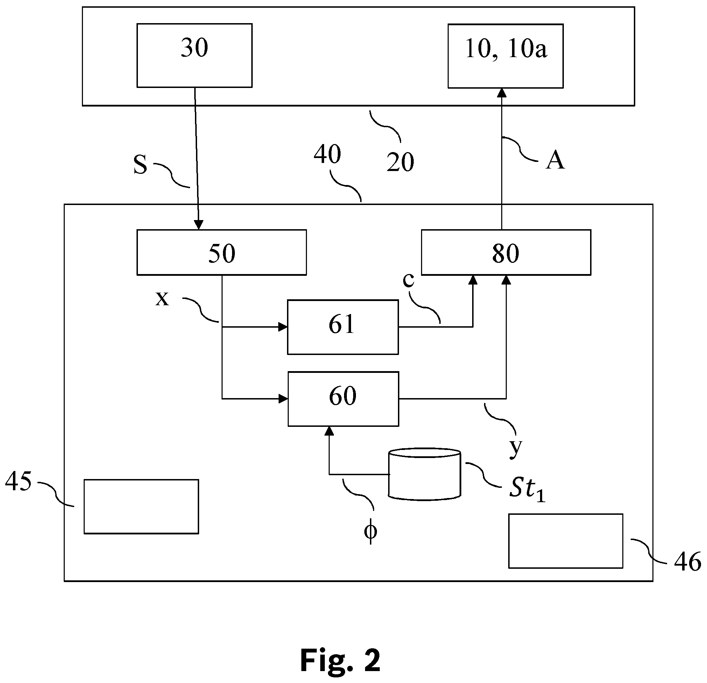

Shown in figure 2 is an embodiment of an actuator (10) in its environment (20) being controlled based on an output signal (y) of the normalizing flow (60) comprised in a control system (40).

At preferably evenly spaced points in time, a sensor (30) senses a condition of the environment (20). The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals (x). Alternatively, in case of no receiving unit (50), each sensor signal (S) may directly be taken as an input signal (x). The input signal (x) may, for example, be given as an excerpt from the sensor signal (S). Alternatively, the sensor signal (S) may be processed to yield the input signal (x). In other words, the input signal (x) is provided in accordance with the sensor signal (S).

The input signal (x) is then passed on to the normalizing flow (60) in further preferred embodiments, the input signal (x) may also be passed on to a classifier (61) which is configured to determine a second output signal (c) characterizing a classification of the input signal (x). The second output signal (c) comprises information that assigns one or more labels to the input signal (x). In these further embodiments, the normalizing flow (60) is preferably trained with the training input signals ($x_i$) used for training the classifier (61).

The normalizing flow (60) is parametrized by parameters ($\phi$), which are stored in and provided by a parameter storage ($St_1$).

The output signal (y) is transmitted to an optional conversion unit (80), which converts the output signal (y) into the control signals (A). If the control system comprises a classifier (61), the second output signal (c) is also transmitted to the optional conversion unit (80) and used for obtaining the control signals (A). The control signals (A) are then transmitted to the actuator (10) for controlling the actuator (10) accordingly. Alternatively, the output signal (y) or the output signal (y) and the second output signal (c) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In embodiments, the control system (40) may comprise the sensor (30). In even further embodiments, the control system (40) alternatively or additionally may comprise an actuator (10).

In even still further embodiments, it can be envisioned that the control system (40) controls a display (10a) instead of or in addition to the actuator (10).

In still further embodiments, the classifier (61) may comprise the normalizing flow. The classifier (61) may for example be a Bayesian classifier, wherein the normalizing flow (60) is configured to determine a class-conditional log-likelihood value for a class of the classifier (61).

Furthermore, the control system (40) may comprise at least one processor (45) and at least one machine-readable storage medium (46) on which instructions are stored which, if carried out, cause the control system (40) to carry out a method according to an aspect of the invention.

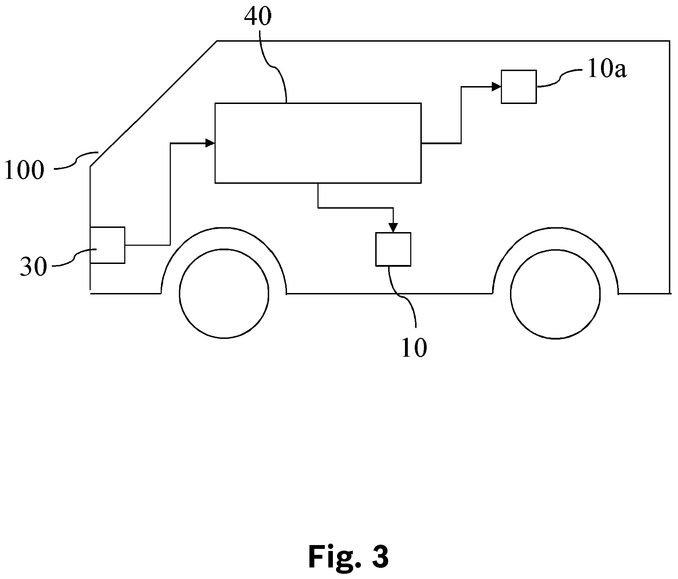

Figure 3 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The input signal (x) may hence be understood as an input image and the classifier (60) as an image classifier.

The image classifier (60) may be configured to detect objects in the vicinity of the at least partially autonomous robot based on the input image (x). The second output signal (c) may comprise an information, which characterizes where objects are located in the vicinity of the at least partially autonomous robot. The control signal (A) may then be determined in accordance with this information, for example to avoid collisions with the detected objects.

The output signal (y) may characterize a log-likelihood of the input image (x) and is preferably also used for determining the control signal (A). For example, if the output signal (y) characterizes a log-likelihood that is below a predefined threshold an autonomous operation of the vehicle (100) may be aborted and operation of the vehicle may be handed over to a driver of the vehicle (100) or an operator of the vehicle (100).

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the image classifier (60) deems them most likely to be, e.g., pedestrians or trees, and the control signal (A) may be determined depending on the classification.

Alternatively or additionally, the control signal (A) may also be used to control the display (10a), e.g., for displaying the objects detected by the image classifier (60). It can also be imagined that the control signal (A) may control the display (10a) such that it produces a warning signal, if the vehicle (100) is close to colliding with at least one of the detected objects. The warning signal may be a warning sound and/or a haptic signal, e.g., a vibration of a steering wheel of the vehicle.

The display may further provide a visual presentation characterizing the output signal. The driver or operator of the vehicle (100) may hence be informed about the log-likelihood of an input image (x) and may hence gain insight into the inner operations of the vehicle (100).

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

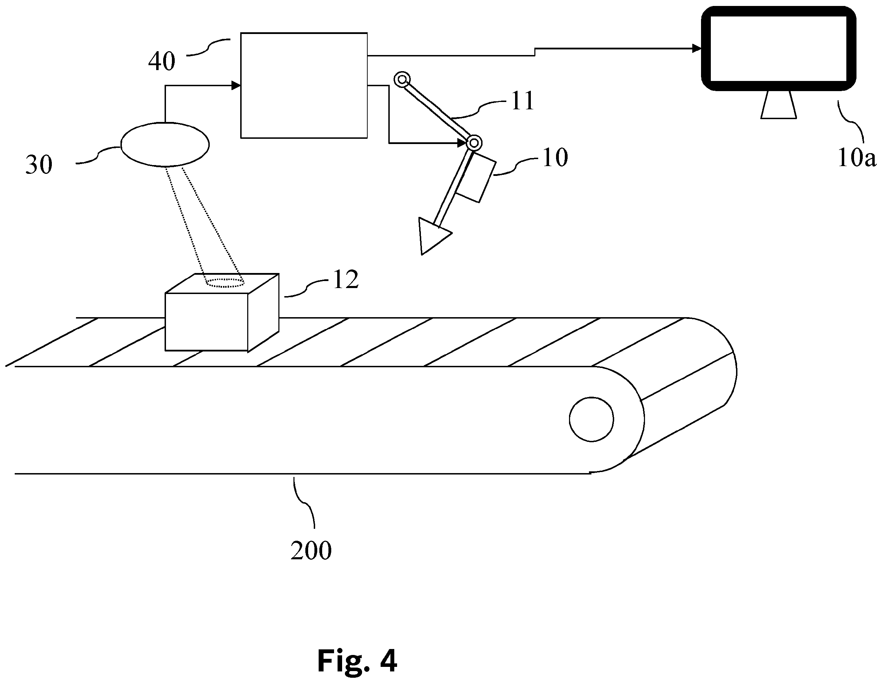

Shown in figure 4 is an embodiment in which the control system (40) is used to control a manufacturing machine (11), e.g., a punch cutter, a cutter, a gun drill or a gripper, of an at least partially automated manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12). The classifier (60) may hence be understood as an image classifier.

The image classifier (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the image classifier (60) classifies, whether the manufactured product is broken or exhibits a defect. The actuator (10) may then be controlled as to remove the manufactured product from the transportation device.

The log-likelihood characterized by the output signal (y) of the normalizing flow may be displayed on a display (10a) to an operator of the manufacturing system (200). Based on the displayed log-likelihood, the operator may determine to intervene in the automatic manufacturing process of the manufacturing system (200). Alternatively or additionally, automatic operation of the manufacturing machine (200) may be stopped if the log-likelihood value characterized by the output signal (y) is less than a predefined threshold or has been less than the predefined threshold for a predefined amount of time.

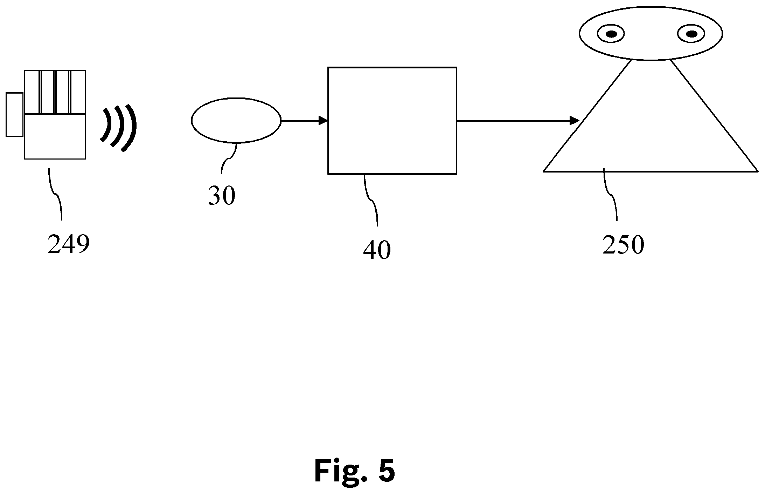

Shown in figure 5 is an embodiment in which the control system (40) is used for controlling an automated personal assistant (250). The sensor (30) may be an optic sensor, e.g., for receiving video images of a gestures of a user (249). Alternatively, the sensor (30) may also be an audio sensor, e.g., for receiving a voice command of the user (249).

The control system (40) then determines control signals (A) for controlling the automated personal assistant (250). The control signals (A) are determined in accordance with the sensor signal (S) of the sensor (30). The sensor signal (S) is transmitted to the control system (40). For example, the classifier (60) may be configured to, e.g., carry out a gesture recognition algorithm to identify a gesture made by the user (249). The control system (40) may then determine a control signal (A) for transmission to the automated personal assistant (250). It then transmits the control signal (A) to the automated personal assistant (250).

For example, the control signal (A) may be determined in accordance with the identified user gesture recognized by the classifier (60). It may comprise information that causes the automated personal assistant (250) to retrieve information from a database and output this retrieved information in a form suitable for reception by the user (249).

In further embodiments, it may be envisioned that instead of the automated personal assistant (250), the control system (40) controls a domestic appliance (not shown) controlled in accordance with the identified user gesture. The domestic appliance may be a washing machine, a stove, an oven, a microwave or a dishwasher.

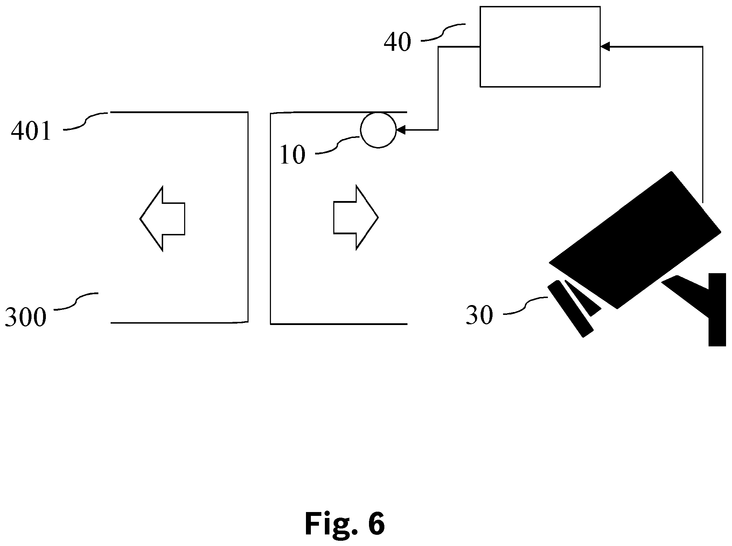

Shown in figure 6 is an embodiment in which the control system (40) controls an access control system (300). The access control system (300) may be designed to physically control access. It may, for example, comprise a door (401). The sensor (30) can be configured to detect a scene that is relevant for deciding whether access is to be granted or not. It may, for example, be an optical sensor for providing image or video data, e.g., for detecting a person's face. The classifier (60) may hence be understood as an image classifier.

The image classifier (60) may be configured to classify an identity of the person, e.g., by matching the detected face of the person with other faces of known persons stored in a database, thereby determining an identity of the person. The control signal (A) may then be determined depending on the classification of the image classifier (60), e.g., in accordance with the determined identity. The actuator (10) may be a lock which opens or closes the door depending on the control signal (A). Alternatively, the access control system (300) may be a non-physical, logical access control system. In this case, the control signal may be used to control the display (10a) to show information about the person's identity and/or whether the person is to be given access.

The log-likelihood characterized by the output signal (y) may also be displayed on the display (10a).

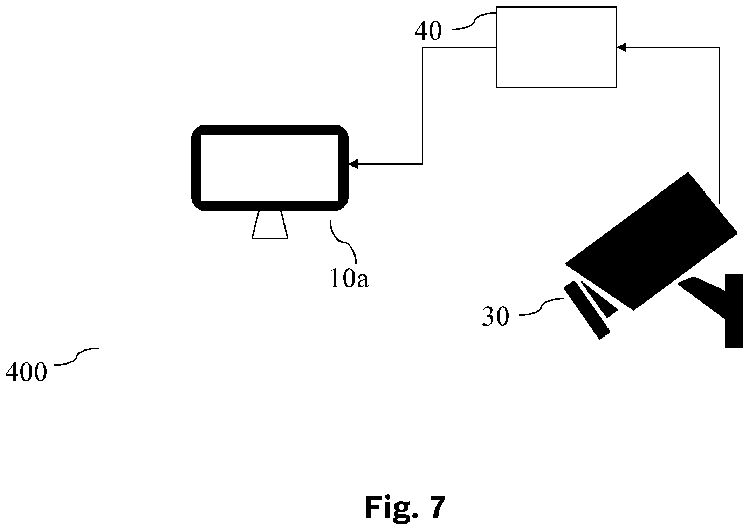

Shown in figure 7 is an embodiment in which the control system (40) controls a surveillance system (400). This embodiment is largely identical to the embodiment shown in figure 5. Therefore, only the differing aspects will be described in detail. The sensor (30) is configured to detect a scene that is under surveillance. The control system (40) does not necessarily control an actuator (10), but may alternatively control a display (10a). For example, the image classifier (60) may determine a classification of a scene, e.g., whether the scene detected by an optical sensor (30) is normal or whether the scene exhibits an anomaly. The control signal (A), which is transmitted to the display (10a), may then, for example, be configured to cause the display (10a) to adjust the displayed content dependent on the determined classification, e.g., to highlight an object that is deemed anomalous by the image classifier (60).

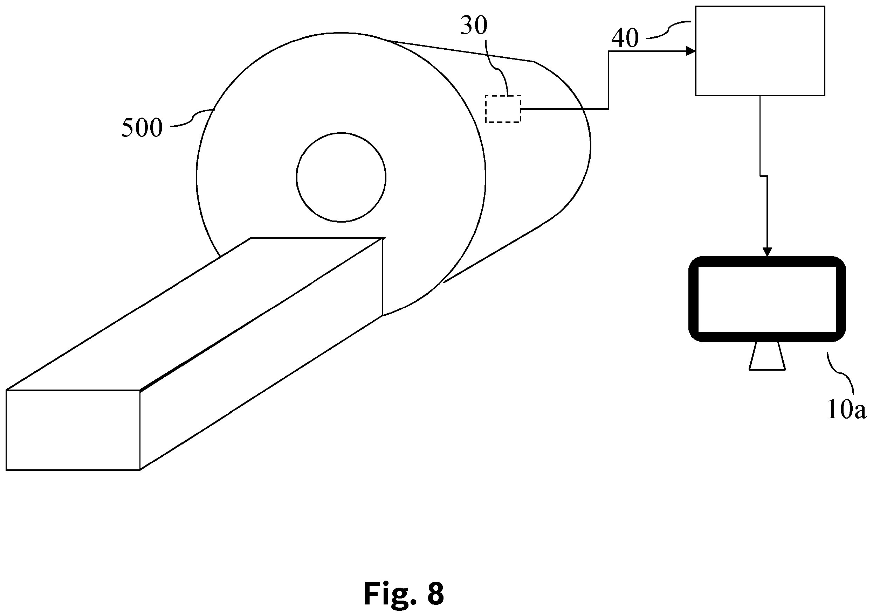

Shown in figure 8 is an embodiment of a medical imaging system (500) controlled by the control system (40). The imaging system may, for example, be an MRI apparatus, x-ray imaging apparatus or ultrasonic imaging apparatus. The sensor (30) may, for example, be an imaging sensor which takes at least one image of a patient, e.g., displaying different types of body tissue of the patient.

The classifier (60) may then determine a classification of at least a part of the sensed image. The at least part of the image is hence used as input image (x) to the classifier (60). The classifier (60) may hence be understood as an image classifier.

The control signal (A) may then be chosen in accordance with the classification, thereby controlling a display (10a). For example, the image classifier (60) may be configured to detect different types of tissue in the sensed image, e.g., by classifying the tissue displayed in the image into either malignant or benign tissue. This may be done by means of a semantic segmentation of the input image (x) by the image classifier (60). The control signal (A) may then be determined to cause the display (10a) to display different tissues, e.g., by displaying the input image (x) and coloring different regions of identical tissue types in a same color.

In further embodiments (not shown) the imaging system (500) may be used for non-medical purposes, e.g., to determine material properties of a workpiece. In these embodiments, the image classifier (60) may be configured to receive an input image (x) of at least a part of the workpiece and perform a semantic segmentation of the input image (x), thereby classifying the material properties of the workpiece. The control signal (A) may then be determined to cause the display (10a) to display the input image (x) as well as information about the detected material properties.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality has N elements, wherein N is the number of elements in the plurality, the elements are assigned the integers from 1 to *N*. It may also be understood that elements of the plurality can be accessed by their index.

**Claims**

1. Computer-implemented method for training a normalizing flow (60), wherein the normalizing flow (60) is configured to determine a first output signal (y) characterizing a likelihood or a log-likelihood of an input signal (x), wherein the input signal (x) characterizes an internal state of a device obtained from a sensor or an image obtained from a sensor or an audio signal obtained from a microphone, wherein the likelihood or log-likelihood characterizes how likely it is to observe the input signal (x) given previously recorded training input signals ($x_i$), wherein the normalizing flow (60) comprises at least one first layer, wherein the first layer comprises trainable parameters and a layer input to the first layer is based on the input signal (x) and the first output signal (y) is based on a layer output of the first layer, wherein training the normalizing flow comprises the steps of:

   • Determining at least one training input signal ($x_i$);
   • Determining a training output signal ($y_i$) for each training input signal ($x_i$) by means of the normalizing flow (60);
   • Determining a first loss value, wherein the first loss value is based on a likelihood or a log-likelihood of the at least one determined training output signal ($y_i$) with respect to a predefined probability distribution;
   • Determining an approximation of a gradient of the trainable parameters of the first layer with respect to the first loss value, wherein the gradient is dependent on an inverse of a matrix of the trainable parameters and determining the approximation of the gradient is achieved by optimizing an approximation of the inverse;
   • Updating the trainable parameters of the first layer based on the approximation of the gradient.

2. Method according to claim 1, wherein the approximation of the inverse is optimized based on the at least one training input signal ($x_i$).

3. Method according to claim 1 or 2, wherein the first layer is a fully connected layer and the layer output is determined according to the formula

$$z_l = \sigma(h_l) = \sigma(W_l z_{l-1}),$$

wherein $z_l$ is the layer output of the first layer, $\sigma$ is an invertible activation function of the first layer and $h_l$ is the result of a matrix multiplication of a matrix $W_l$ comprising the trainable parameters of the first layer and the layer input $z_{l-1}$, wherein the approximation of the gradient of the first loss value with respect to the trainable parameters is determined according to the formula

$$\nabla_{W_l} = \frac{\partial p_X(x_i)}{\partial h_l} z_{l-1}^T + R_l^T,$$

wherein $\frac{\partial p_X(x_i)}{\partial h_l}$ is a partial derivative of the first loss value with respect to the result of the matrix multiplication, the superscript $T$ denotes transposing a matrix or a vector, $x_i$ is the training input signal and $R_l$ is the approximation of the inverse of the matrix $W_l$.

4. Method according to claim 3, wherein $R_l$ is determined based on a second loss function

$$\mathcal{L}_{\mathrm{recon}}^{(l)} = \left\| R_l W_l z_{l-1} - z_{l-1} \right\|,$$

wherein $\|\cdot\|$ is a norm.

5. Method according to claim 4, wherein $\boldsymbol{R_l}$ is determined by means of an iterative optimization algorithm, particularly a gradient descent algorithm, wherein only one optimization step is performed for determining $\boldsymbol{R_l}$.

6. Method according to claim 1 or 2, wherein the first layer is a convolutional layer and the layer output is determined according to the formula

$$Z_l = \sigma(H_l) = \sigma(W_l \star Z_{l-1}),$$

wherein $Z_l$ is the layer output of the first layer, $\sigma$ is an invertible activation function of the first layer, $H_l$ is the result of a discrete convolution of a tensor $W_l$ comprising the trainable parameters of the first layer and the layer input $Z_{l-1}$ and $\star$ denotes a discrete convolution operation, wherein the gradient of the first loss value with respect to the trainable parameters is determined according to the formula

$$\nabla_{W_l} = \frac{\partial p_X(x_i)}{\partial H_l} \star Z_{l-1} + flip(R_l) \odot M,$$

$$M = ones\_like(Z_l) \star ones\_like(Z_{l-1}),$$

wherein $\frac{\partial p_X(x_i)}{\partial H_l}$ is a partial derivative of the first loss value with respect to the result of the discrete convolution, $x_i$ is the training input signal, $\odot$ denotes an element-wise multiplication operation, *ones_like* is a function that takes a first tensor as input and returns a second tensor of the same shape as the first tensor, wherein the second tensor is filled with all ones, and $R_l$ is a tensor characterizing an approximation of a third tensor, wherein convolving the third tensor with $H_l$ yields $Z_{l-1}$, and flip is a function that determines a tensor for a transpose convolution.

7. Method according to claim 6, wherein $R_l$ is determined based on a second loss function

$$\mathcal{L}_{recon}^{(l)} = \| R_l \star W_l \star Z_{l-1} - Z_{l-1} \|,$$

wherein $\|\cdot\|$ is a norm.

8. Method according to claim 7, wherein $R_l$ is determined by means of an iterative optimization algorithm, particularly a gradient descent algorithm, wherein only one optimization step is performed for determining $R_l$.

9. Method according to any one of the preceding claims, wherein a device (100, 200, 250, 300, 400, 500, 600) is operated in accordance with the output signal (y) of the normalizing flow.

10. Method according to any one of the preceding claims, wherein the normalizing flow (60) is comprised in a classifier (61), wherein the classifier (61) is configured to determine a second output signal characterizing a classification of the input signal (x), wherein the second output signal is determined based on the first output signal (y).

11. Method according to any one of the preceding claims, wherein the input signal (x) characterizes an internal state of a device (100, 200, 250, 300, 400, 500, 600) and/or an operation status of the device (100, 200, 250, 300, 400, 500, 600) and/or a state of an environment of the device (100, 200, 250, 300, 400, 500, 600), wherein the information comprised in the first output signal (y) of the normalizing flow (60) is made available to a user of the device (100, 200, 250, 300, 400, 500, 600) by means of a displaying device (10a).

12. Training system (140), which is configured to carry out the training method according to any one of the claims 1 to 8.

13. Computer program that is configured to cause a computer to carry out the method according to any one of the claims 1 to 11 with all of its steps if the computer program is carried out by a processor (45, 145).

14. Machine-readable storage medium (46, 146) on which the computer program according to claim 13 is stored.

**Patentansprüche**

1. Computer-implementiertes Verfahren zum Trainieren eines Normalisierungsflusses (60), wobei der Normalisierungsfluss (60) dazu ausgelegt ist, ein erstes Ausgangssignal (y) zu bestimmen, das eine Likelihood oder eine Log-Likelihood eines Eingangssignals (x) charakterisiert, wobei das Eingangssignal (x) einen internen Zustand einer Vorrichtung charakterisiert, der von einem Sensor oder einem von einem Sensor erhaltenen Bild oder einem von einem Mikrofon erhaltenen Audiosignal erhalten wird, wobei die Likelihood oder Log-Likelihood charakterisiert, wie wahrscheinlich es ist, das Eingangssignal (x) angesichts zuvor aufgezeichneter Trainingseingangssignale ($x_i$) zu beobachten, wobei der Normalisierungsfluss (60) mindestens eine erste Schicht umfasst, wobei die erste Schicht trainierbare Parameter umfasst und eine Schichteingabe in die erste Schicht auf dem Eingangssignal (x) basiert und das erste Ausgangssignal (y) auf einer Schichtausgabe der ersten Schicht basiert, wobei das Trainieren des Normalisierungsflusses die folgenden Schritte umfasst:

• Bestimmen mindestens eines Trainingseingangssignals ($x_i$);
• Bestimmen eines Trainingsausgangssignals ($y_i$) für jedes Trainingseingangssignal ($x_i$) mittels des Normalisierungsflusses (60);
• Bestimmen eines ersten Verlustwerts, wobei der erste Verlustwert auf einer Likelihood oder einer Log-Likelihood des mindestens einen bestimmten Trainingsausgangssignals ($y_i$) in Bezug auf eine vordefinierte Wahrscheinlichkeitsverteilung basiert;
• Bestimmen einer Approximation eines Gradienten der trainierbaren Parameter der ersten Schicht in Bezug auf den ersten Verlustwert, wobei der Gradient von einer Inversen einer Matrix der trainierbaren Parameter abhängt und das Bestimmen der Approximation des Gradienten durch Optimieren einer Approximation der Inversen erreicht wird;
• Aktualisieren der trainierbaren Parameter der ersten Schicht basierend auf der Approximation des Gradienten.

2. Verfahren nach Anspruch 1, wobei die Approximation der Inversen basierend auf dem mindestens einen Trainingseingangssignal ($x_i$) optimiert wird.

3. Verfahren nach Anspruch 1 oder 2, wobei die erste Schicht eine vollständig verbundene Schicht ist und die Schichtausgabe gemäß folgender Formel bestimmt wird

$$z_l = \sigma(h_l) = \sigma(W_l z_{l-1}),$$

wobei $z_l$ die Schichtausgabe der ersten Schicht ist, $\sigma$ eine invertierbare Aktivierungsfunktion der ersten Schicht ist und $h_l$ das Ergebnis einer Matrixmultiplikation einer Matrix $W_l$ ist, die die trainierbaren Parameter der ersten Schicht und die Schichteingabe $z_{l-1}$ umfasst, wobei die Approximation des Gradienten des ersten Verlustwerts in Bezug auf die trainierbaren Parameter gemäß folgender Formel bestimmt wird

$$\nabla_{W_l} = \frac{\partial p_X(x_i)}{\partial h_l} z_{l-1}^T + R_l^T,$$

wobei $\frac{\partial p_X(x_i)}{\partial h_l}$ eine partielle Ableitung des ersten Verlustwerts in Bezug auf das Ergebnis der Matrixmultiplikation ist, das hochgestellte T ein Transponieren einer Matrix oder eines Vektors angibt, $x_i$ das Trainingseingangssignal ist und $R_l$ die Approximation der Inversen der Matrix $W_l$ ist.

4. Verfahren nach Anspruch 3, wobei $R_l$ basierend auf einer zweiten Verlustfunktion bestimmt wird

$$\mathcal{L}_{recon}^{(l)} = \| R_l W_l z_{l-1} - z_{l-1} \|,$$

wobei $\|\cdot\|$ eine Norm ist.

5. Verfahren nach Anspruch 4, wobei $R_l$ mittels eines iterativen Optimierungsalgorithmus, insbesondere eines Gradientenabstiegsalgorithmus, bestimmt wird, wobei nur ein Optimierungsschritt zum Bestimmen von $R_l$ durchgeführt wird.

6. Verfahren nach Anspruch 1 oder 2, wobei die erste Schicht eine Faltungsschicht ist und die Schichtausgabe gemäß folgender Formel bestimmt wird

$$Z_l = \sigma(H_l) = \sigma(W_l * Z_{l-1}),$$

wobei $Z_l$ die Schichtausgabe der ersten Schicht ist, $\sigma$ eine invertierbare Aktivierungsfunktion der ersten Schicht ist, $H_l$ das Ergebnis einer diskreten Faltung eines Tensors $W_l$ ist, der die trainierbaren Parameter der ersten Schicht und die Schichteingabe $Z_{l-1}$ umfasst, und * eine diskrete Faltungsoperation angibt, wobei der Gradient des ersten Verlustwerts in Bezug auf die trainierbaren Parameter gemäß folgender Formel bestimmt wird

$$\nabla_{W_l} = \frac{\partial p_X(x_i)}{\partial H_l} \star Z_{l-1} + flip(R_l) \odot M,$$

$$M = \text{ones\_like}(Z_l) * \text{ones\_like}(Z_{l-1}),$$

wobei $\frac{\partial p_X(x_i)}{\partial H_l}$ eine partielle Ableitung des ersten Verlustwerts in Bezug auf das Ergebnis der diskreten Faltung ist, $x_i$ das Trainingseingangssignal ist, $\odot$ eine elementweise Multiplikationsoperation angibt, ones_like eine Funktion ist, die einen ersten Tensor als Eingabe nimmt und einen zweiten Tensor der gleichen Form wie der erste Tensor zurückgibt, wobei der zweite Tensor mit lauter Einsen gefüllt ist und $R_l$ ein Tensor ist, der eine Approximation eines dritten Tensors charakterisiert, wobei das Falten des dritten Tensors mit $H_l$ $Z_{l-1}$ ergibt und flip eine Funktion ist, die einen Tensor für eine transponierte Faltung bestimmt.

7. Verfahren nach Anspruch 6, wobei $R_l$ basierend auf einer zweiten Verlustfunktion bestimmt wird

$$\mathcal{L}_{recon}^{(l)} = \| R_l \star W_l \star Z_{l-1} - Z_{l-1} \|,$$

wobei $\|\cdot\|$ eine Norm ist.

8. Verfahren nach Anspruch 7, wobei $R_l$ mittels eines iterativen Optimierungsalgorithmus, insbesondere eines Gradientenabstiegsalgorithmus, bestimmt wird, wobei nur ein Optimierungsschritt zum Bestimmen von $R_l$ durchgeführt wird.

9. Verfahren nach einem der vorhergehenden Ansprüche, wobei eine Vorrichtung (100, 200, 250, 300, 400, 500, 600) gemäß dem Ausgangssignal (y) des Normalisierungsflusses betrieben wird.

10. Verfahren nach einem der vorhergehenden Ansprüche, wobei der Normalisierungsfluss (60) in einem Klassifizierer (61) enthalten ist, wobei der Klassifizierer (61) dazu ausgelegt ist, ein zweites Ausgangssignal zu bestimmen, das eine Klassifizierung des Eingangssignals (x) charakterisiert, wobei das zweite Ausgangssignal basierend auf dem ersten Ausgangssignal (y) bestimmt wird.

11. Verfahren nach einem der vorhergehenden Ansprüche, wobei das Eingangssignal (x) einen internen Zustand einer Vorrichtung (100, 200, 250, 300, 400, 500, 600) und/oder einen Betriebsstatus der Vorrichtung (100, 200, 250, 300, 400, 500, 600) und/oder einen Zustand einer Umgebung der Vorrichtung (100, 200, 250, 300, 400, 500, 600) charakterisiert, wobei die Informationen, die in dem ersten Ausgangssignal (y) des Normalisierungsflusses (60) enthalten sind, einem Benutzer der Vorrichtung (100, 200, 250, 300, 400, 500, 600) mittels einer Anzeigevorrichtung (10a) verfügbar gemacht werden.

12. Trainingssystem (140), das dazu ausgelegt ist, das Trainingsverfahren nach einem der Ansprüche 1 bis 8 auszuführen.

13. Computerprogramm, das dazu ausgelegt ist, einen Computer zu veranlassen, das Verfahren nach einem der Ansprüche 1 bis 11 mit allen seinen Schritten auszuführen, wenn das Computerprogramm von einem Prozessor (45, 145) ausgeführt wird.

14. Maschinenlesbares Speichermedium (46, 146), auf dem das Computerprogramm nach Anspruch 13 gespeichert ist.

**Revendications**

1. Procédé informatique d'apprentissage d'un flux de normalisation (60), dans lequel le flux de normalisation (60) est configuré pour déterminer un premier signal de sortie (y) caractérisant une probabilité ou une probabilité logarithmique d'un signal d'entrée (x), dans lequel le signal d'entrée (x) caractérise l'état interne d'un dispositif obtenu à partir d'un capteur ou d'une image obtenue à partir d'un capteur ou d'un signal audio obtenu à partir d'un microphone, où la probabilité ou la probabilité logarithmique caractérise la probabilité d'observer le signal d'entrée (x) étant donné des signaux d'entrée d'apprentissage ($x_i$) enregistrés précédemment, où le flux de normalisation (60) comprend au moins une première couche, la première couche comprenant des paramètres pouvant faire l'objet d'un apprentissage et une entrée de couche dans la première couche étant basée sur le signal d'entrée (x) et le premier signal de sortie (y) étant basé sur une sortie de couche de la première couche, où l'apprentissage du flux de normalisation comprend les étapes suivantes :

• déterminer au moins un signal d'entrée d'apprentissage ($x_i$) ;
• déterminer un signal de sortie d'apprentissage ($y_i$) pour chaque signal d'entrée d'apprentissage ($x_i$) au moyen du flux de normalisation (60) ;
• déterminer une première valeur de perte, la première valeur de perte étant basée sur une probabilité ou une probabilité logarithmique de l'au moins un signal de sortie d'apprentissage déterminé ($y_i$) par rapport à une distribution de probabilité prédéfinie ;
• déterminer une approximation d'un gradient des paramètres pouvant faire l'objet d'un apprentissage de la première couche par rapport à la première valeur de perte, le gradient dépendant de l'inverse d'une matrice des paramètres pouvant faire l'objet d'un apprentissage, et la détermination de l'approximation du gradient étant obtenue par optimisation d'une approximation de l'inverse ;
• mettre à jour les paramètres pouvant faire l'objet d'un apprentissage de la première couche sur la base de l'approximation du gradient.

2. Procédé selon la revendication 1, dans lequel l'approximation de l'inverse est optimisée sur la base de l'au moins un signal d'entrée d'apprentissage ($x_i$).

3. Procédé selon la revendication 1 ou la revendication 2, dans lequel la première couche est une couche entièrement reliée et la sortie de couche est déterminée selon la formule suivante

$$z_l = \sigma(h_l) = \sigma(W_l z_{l-1}),$$

où $z_l$ est la sortie de couche de la première couche, $\sigma$ est une fonction d'activation inversible de la première couche et $h_l$ est le résultat d'une multiplication matricielle d'une matrice $W_l$ comprenant les paramètres pouvant faire l'objet d'un apprentissage de la première couche et de l'entrée de couche $z_{l-1}$, l'approximation du gradient de la première valeur de perte par rapport aux paramètres d'apprentissage étant déterminée selon la formule suivante

$$\nabla_{W_l} = \frac{\partial p_X(x_i)}{\partial h_l} z_{l-1}^T + R_l^T,$$

où $\frac{\partial p_X(x_i)}{\partial h_l}$ est une dérivée partielle de la première valeur de perte par rapport au résultat de la multiplication matricielle, l'exposant T désigne la transposition d'une matrice ou d'un vecteur, $x_i$ est le signal d'entrée d'apprentissage et $R_i$ est l'approximation de l'inverse de la ma-

trice $W_i$.

4. Procédé selon la revendication 3, dans lequel $R_l$ est déterminé sur la base d'une deuxième fonction de perte

$$\mathcal{L}_{\text{recon}}^{(l)} = \|R_l W_l z_{l-1} - z_{l-1}\| ,$$

où $\|\cdot\|$ est une norme.

5. Procédé selon la revendication 4, dans lequel $R_l$ est déterminé au moyen d'un algorithme d'optimisation itératif, en particulier d'un algorithme de descente de gradient, où une seule étape d'optimisation est effectuée pour déterminer $R_l$.

6. Procédé selon la revendication 1 ou la revendication 2, dans lequel la première couche est une couche convolutionnelle et la sortie de couche est déterminée selon la formule suivante

$$Z_l = \sigma(H_l) = \sigma(W_l * Z_{l-1}),$$

où $Z_l$ est la sortie de couche de la première couche, $\sigma$ est une fonction d'activation inversible de la première couche, $H_l$ est le résultat d'une convolution discrète d'un tenseur $W_l$ comprenant les paramètres pouvant faire l'objet d'un apprentissage de la première couche et de l'entrée de couche $Z_{l-1}$, et * indique une opération de convolution discrète, où le gradient de la première valeur de perte par rapport aux paramètres pouvant faire l'objet d'un apprentissage est déterminé selon la formule suivante

$$\nabla_{W_l} = \frac{\partial p_X(x_i)}{\partial H_l} \star Z_{l-1} + flip(R_l) \odot M,$$

$$M = ones\_like(Z_l) * ones\_like(Z_{l-1}),$$

où $\frac{\partial p_X(x_i)}{\partial H_l}$ est une dérivée partielle de la première valeur de perte par rapport au résultat de la convolution discrète, $x_i$ est le signal d'entrée d'apprentissage, $\odot$ désigne une opération de multiplication par élément, $ones\_like$ est une fonction qui prend un premier tenseur comme entrée et renvoie un deuxième tenseur de la même forme que le premier tenseur, le deuxième tenseur étant rempli de tous les uns, et $R_l$ est un tenseur caractérisant une approximation d'un troisième tenseur, où la convolution du troisième tenseur avec $H_l$ donne $Z_{l-1}$, et $flip$ est une fonction qui détermine un tenseur pour une convolution transposée.

7. Procédé selon la revendication 6, dans lequel $R_l$ est déterminé sur la base d'une deuxième fonction de perte

$$\mathcal{L}_{\text{recon}}^{(l)} = \|R_l \star W_l \star Z_{l-1} - Z_{l-1}\| ,$$

où $\|\cdot\|$ est une norme.

8. Procédé selon la revendication 7, dans lequel $R_l$ est déterminé au moyen d'un algorithme d'optimisation itératif, en particulier d'un algorithme de descente de gradient, où une seule étape d'optimisation est effectuée pour déterminer $R_l$.

9. Procédé selon l'une quelconque des revendications précédentes, dans lequel un dispositif (100, 200, 250, 300, 400, 500, 600) fonctionne conformément au signal de sortie (y) du flux de normalisation.

10. Procédé selon l'une quelconque des revendications précédentes, dans lequel le flux de normalisation (60) est compris dans un classificateur (61), où le classificateur (61) est configuré pour déterminer un deuxième signal de sortie caractérisant une classification du signal d'entrée (x), où le deuxième signal de sortie est déterminé sur la base du premier signal de sortie (y).

11. Procédé selon l'une quelconque des revendications précédentes, dans lequel le signal d'entrée (x) caractérise un état interne d'un dispositif (100, 200, 250, 300, 400, 500, 600) et/ou un état de fonctionnement du dispositif (100, 200, 250, 300, 400, 500, 600) et/ou un état d'un environnement du dispositif (100, 200, 250, 300, 400, 500, 600), les informations comprises dans le premier signal de sortie (y) du flux de normalisation (60) étant mises à la disposition d'un utilisateur du dispositif (100, 200, 250, 300, 400, 500, 600) au moyen d'un dispositif d'affichage (10a).

12. Système (140) d'apprentissage, configuré pour mettre en œuvre le procédé d'apprentissage selon l'une quelconque des revendications 1 à 8.

13. Programme informatique configuré pour amener un ordinateur à mettre en œuvre le procédé selon l'une quelconque des revendications 1 à 11 avec toutes ses étapes si le programme informatique est mis en œuvre par un processeur (45, 145).

14. Support de stockage lisible par machine (46, 146) sur lequel le programme d'ordinateur selon la revendication 13 est stocké.

Fig. 1

**Fig. 2**

**Fig. 3**

**Fig. 4**

EP 3 975 011 B1

**Fig. 5**

**Fig. 6**

EP 3 975 011 B1

40

10a

30

400

**Fig. 7**

**Fig. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- FFJORD: Free-form Continuous Dynamics for Scalable Reversible Generative Models. **WILL GRATHWOHL et al.** ARXIV.ORG. CORNELL UNIVERSITY LIBRARY, 201 OLIN LIBRARY CORNELL UNIVERSITY ITHACA, 02 October 2018

- **DIEDERIK P. KINGMA, PRAFULLA DHARIWAL**. *Convolutions*, 10 July 2018, https://arxiv.org/abs/1807.03039v2